# EUROPEAN PATENT APPLICATION

(11) **EP 1 418 368 A1**
(43) Date of publication of application: **12.05.2004**
(21) Application number: 02751629.3
(22) Date of filing: 18.07.2002
(51) Int. Cl.: F16J 15/32, F16C 33/78

(54) **ENCODER-EQUIPPED SEALING DEVICE**

(30) Priority: 18.07.2001 JP 2001217670
(71) Applicant: UCHIYAMA MANUFACTURING CORP., Okayama-shi, Okayama 702-8004 (JP)
(72) Inventor: YAMAMOTO, H., c/o Uchiyama Manufacturing Corp., Akaiwa-gun, Okayama 701-2221 (JP)
(74) Representative: Mounteney, Simon James
(86) International application number: PCT/JP2002/007297
(87) International publication number: WO 2003/014601

(57) **Abstract**

An encoder-equipped sealing device (1) that includes two seal members (5, 15) arranged to face opposite each other and each having a reinforcing ring (4, 14) with an L-shaped cross section, each of the reinforcing rings (4, 14) having a cylindrical portion (2,12) and a flanged portion (3, 13) extending from one end of the cylindrical portion (2, 12) in the direction perpendicular to the cylindrical portion (2, 12). Seal member (15) includes an elastic seal (6) formed in such a manner as to be supported by the reinforcing ring (14) of said seal member (15), the elastic seal (6) extending toward the other seal member (5) such that a seal portion (7, 8, 9) is formed between the elastic seal (6) and said other seal member (5). Seal member (5) includes an encoder (10) on the side of the flanged portion (3) of said seal member (5) that is opposite the side facing the other seal member (15). Seal member (15) includes an elastic element (16) formed in such a manner as to be supported by the flanged portion (14) of said seal member (15). The elastic element (16) formed on the side of the flanged portion (13) of said seal member (15) that is opposite the side facing said seal member (5).

## Description

### Technical Field

Generally, the present invention relates to an improvement to or in the sealing device with an encoder, that is, an encoder-equipped sealing device. More particularly, the present invention relates to such encoder-equipped sealing device that may be mounted on the bearing unit for supporting a wheel on an automotive vehicle so that it can seal the bearing unit by isolating the inside from the outside, wherein the encoder that is incorporated in the encoder-equipped sealing device may be located to face opposite the rotations detecting sensor that responds to the encoder for detecting the number of revolutions for the vehicle wheel when the encoder-equipped sealing device is mounted on the bearing unit.

### Background Art

The encoder (pulse coder) that is incorporated in the encoder-equipped sealing device that has been described above takes the form of a pulse generator ring that may be mounted on an automotive vehicle wheel in order to flexibly control the device that ensures that the automotive vehicle can be running with safety and stability, such as the anti-lock braking system, traction control system, and stability control system. This encoder may be mounted on the hub flange in the suspension system on the automotive vehicle together with a sensor, and is used to detect the number of revolutions for each of the vehicle wheels. Specifically, the encoder that is mounted on each of the four wheels, such as front, rear, right and left wheels, may be used in conjunction with the sensor so that it can detect any difference in the number of revolutions between each of the wheels. In response to such difference, the encoder may produce pulses for controlling the drive system or brake system to turn on and off, thereby controlling the behavior of the vehicle to ensure that the vehicle can be running with stability and safety in case some emergency situations should occur.

Lubricating oil leaks may occur on the bearing unit where the encoder may be located to face opposite the sensor for detecting the number of wheel revolutions as described above, and seals are required to avoid such leaks. Most of the conventional sealing devices have the construction that includes both the rotations detecting device and sealing device that may be located in the gap or space that is available in the bearing unit.

Typically, the sealing device that has been proposed for those recent years provides the rotations detecting function and encoder function, both of which are incorporated integrally within the sealing device, and has been used widely for the practical purposes.

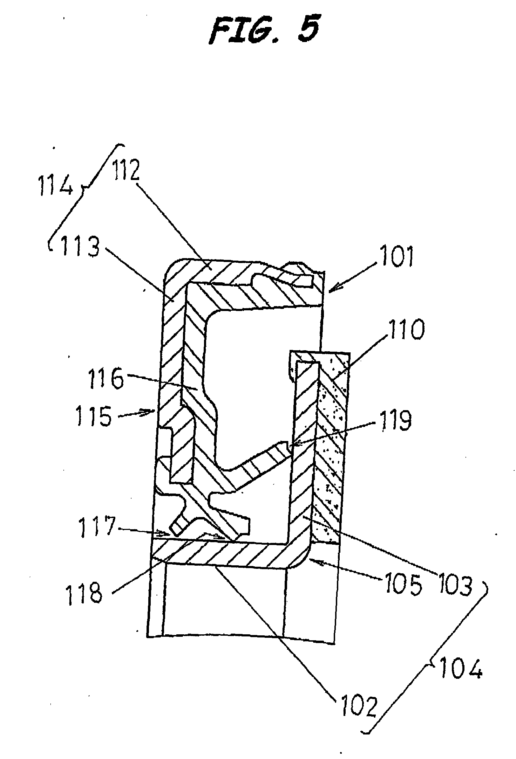

By referring now to Fig. 5, a typical example of the conventional encoder-equipped sealing device, generally identified by 101, is described below. As shown in Fig. 5, the sealing device includes two seal members 105, 115 combined together and arranged to face opposite each other, each of which has a reinforcing ring 104, 114 having an L-shape cross section, each of the reinforcing rings 104, 114 having a cylindrical portion 102, 112 and a flanged portion 103, 113 extending from one end of the respective cylindrical portion 102, 112 in the direction perpendicular to the respective cylindrical portion 102, 112. In such encoder-equipped sealing device 101, at least one of the two seal members 105, 115 (such as the one 115 in the case shown in Fig. 5) includes an elastic seal 116 that is formed in such a manner as to be supported by the reinforcing ring 114. The elastic seal 116 extends toward the other seal member 105, and seal portions (such as the ones 117, 118, 119 in the case shown in Fig. 5) are formed between the seal member 105 and seal member 115. In one of the two seal members 105, 115 (such as the one 105 in the case shown in Fig. 5), the flanged portion 103 of the reinforcing ring 104 has an encoder 110, which is attached to the side thereof opposite the side on which the other seal member 115 is located.

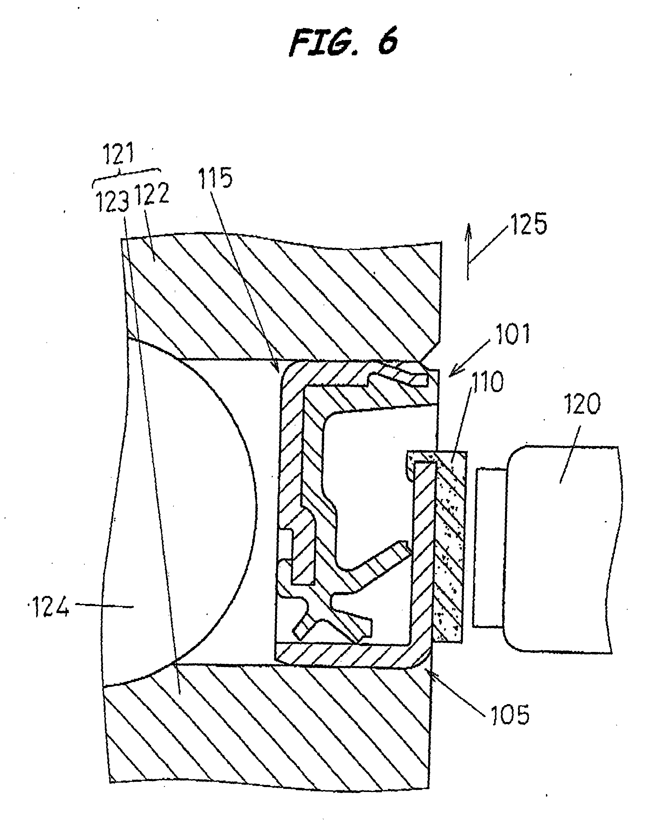

It may be seen in Fig. 6 that the encoder-equipped sealing device described above may be mounted on a bearing unit 121 having two elements, such as inner race 123 and outer race 122, rotating relative to each other. With the encoder-equipped sealing device being mounted on the bearing unit, the encoder 110 may be located adjacently to a sensor 120 that is disposed to face opposite the encoder so that the number of wheel revolutions can be detected by the sensor responding to the pulses from the encoder. In the embodiment shown in Figs. 5 and 6, it is assumed that the inner race 123 corresponds to the rotational element and the outer race 122 corresponds to the non-rotational element.

Each of the reinforcing rings 104, 114 may be formed from any of the metals such as iron, stainless steel and the like, and the elastic seal 116 may be formed from any of the elastic elements such as synthetic rubber, elastomer and the like. The elastic seal 116 thus formed may be attached to the reinforcing ring 114 so that it can be supported by the reinforcing ring 114.

In the embodiment shown in Figs. 5 and 6, it may be seen that the elastic seal 116 is supported by the seal member 115, and is formed so that it can extend toward the seal member 105 and seal portions 117, 118, 119 can be formed between the seal member 115 and seal member 105. Since those seal portions are provided for sealing the bearing unit 121 by isolating the inside from the outside of the bearing unit, it should be noted that it is sufficient that the elastic seal that is formed on at least one of the two seal members and is supported by the reinforcing ring of the one seal member should extend toward the other seal member and the seal portions should be formed between the two seal members. As an alternative construction, the elastic seal 116 may be supported by the seal member 105 and the seal portions may be formed between the seal member 105 and seal member 115.

It is known that the encoder is usually made of a mixture composed of any of the elastic elements such as synthetic rubber, synthetic resin and the like and any of the ferromagnetic materials such as ferrite in powdery forms.

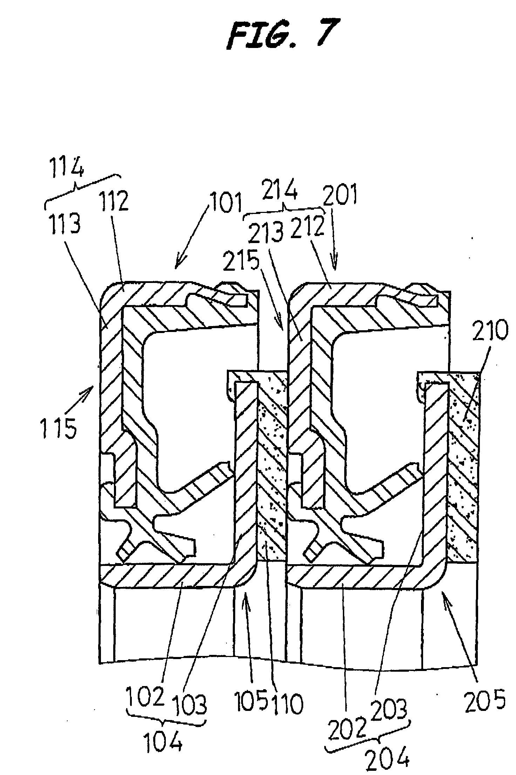

The encoder-equipped sealing device that has been completed as described above, including the seal members 105, 115 combined into one unit, may be placed in an appropriate storage area as shown in Fig. 6 until it is finally mounted on the area, such as the bearing unit, which needs to be sealed. When each set of several such encoder-equipped sealing devices are stored, the encoder-equipped sealing devices in each set are placed one over another so that they can be oriented in one particular direction as shown in Fig. 7. This is done for the ease of handling or for the ease of being set in any machine tool that is used for mounting each encoder-equipped sealing device on the bearing unit. In the example shown in Fig. 7, two encoder-equipped sealing devices are provided, in which one encoder-equipped sealing device 101 has the seal members 105, 115 combined together and the other encoder-equipped sealing device 201 has the seal members 205, 215 combined together, and they are placed one over the other such that they can be oriented in one particular direction, with the respective encoders 110, 210 in the encoder-equipped sealing devices 101, 201 being located on the right side in Fig. 7.

The magazine, which contains several units, such as two units 101, 102, of the encoder-equipped sealing device placed one over the other such that they can be oriented in one particular direction as described, may be transported or stored with the units in the magazine being tied in a row. Finally, the units may be removed one by one from the magazine, and may be mounted on the bearing unit 121.

It should be noted, however, that when the units 101, 102 are placed one over the other within the magazine as they are tied in a row, the encoders 110, 210 on the respective units 101, 201 produce the strong magnetic forces. As the two units 101, 201 are placed adjacently to each other within the magazine, the encoder 110 on one unit 101, for example, being located to face opposite the flanged portion 213 of the reinforcing ring 214 of the seal member 215 on the other unit 201 and making contact with the flanged portion 213, the flanged portion 213 may be magnetically attached to the encoder 110 on the one unit 101 under the magnetic attraction of the encoder 110. As a result, the magnetic cohesion may occur between the two units, that is, the seal portion 105 on the one unit 101 and the seal portion 215 on the other unit 201 may be attached to each other by attracting each other under the magnetic action of the encoder 110.

When this occurs, the units 101, 102 within the magazine cannot be removed from the magazine because they may become stuck within the magazine when an attempt is made to remove and mount each of the units 101, 102 onto the area in the bearing unit 121 that needs to be sealed, by using any mechanical means such as the mounting machine. In other words, the mounting machine cannot work well, which may introduce the serious problem of affecting the mounting efficiency of the mounting machine considerably.

In order to avoid that the above situation will occur, one possible way would be to interpose something (not shown) that is thick enough to put the two units 101, 201 apart from each other when the units are placed one over the other within the magazine so that they can be aligned in one particular and same direction. Using this way, however, it would be difficult to handle the units. For this reason, this method had the short life.

In contrast to the prior art encoder-equipped sealing device that has been described above, the present invention provides the encoder-equipped sealing device that has the simple construction, wherein all of the serious problems and inconveniences associated with the prior art encoder-equipped sealing device have been eliminated. In accordance with the encoder-equipped sealing device of the present invention, several units of the encoder-equipped sealing device may be placed one over another within the mounting magazine such that they are oriented in one particular direction, and when one of the units are removed from the magazine and mounted on the bearing unit, it can be performed reliably and accurately without causing any handling problems because there no magnetic cohesion between the two units would be caused by the magnetic attraction of the encoder on one of the two units.

### SUMMARY OF THE INVENTION

The present invention solves the problems associated with the conventional encoder-equipped sealing device that have been mentioned above, by providing the following encoder-equipped sealing device.

An encoder-equipped sealing device provided by the present invention includes two seal members combined together such that they are arranged to face opposite each other, each of the two seal members includes a reinforcing ring with an L-shaped cross section having a cylindrical portion and a flanged portion extending from one end of the cylindrical portion in the direction perpendicular to the cylindrical portion. At least one of the before described two seal members includes an elastic seal formed in such a manner as to be supported by the reinforcing ring of said one seal member, said elastic seal extending toward the other seal member such that a seal portion is formed between the elastic seal and said other seal members. And, at least one of the before described two seal members includes an encoder that is attached to the side of the flanged portion of the reinforcing ring of said one seal member that is opposite the side facing the other seal member. Wherein, said other seal member, arranged to face opposite said one seal member including an encoder on the flanged portion, includes an elastic element formed in such a manner as to be supported by the flanged portion of the reinforcing ring of said other seal member, said elastic element formed on the side of the flanged portion of the reinforcing ring of said other seal member that is opposite the side facing said one seal member includes an encoder on the flanged portion.

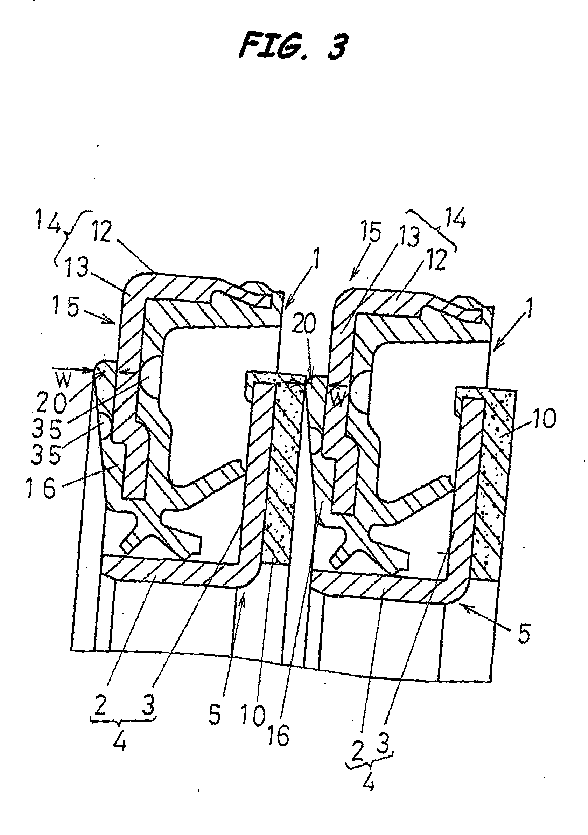

Several units of the encoder-equipped sealing device according to the present invention, such as two units in this case, may be stored in a mounting magazine before they are actually mounted on the area that needs to be sealed, such the bearing unit. Within the magazine, the two units may be placed one over the other so that they can be oriented in one particular direction as shown in Fig. 3. When the units are placed in the magazine, the encoder on one unit can always be separated by the elastic element on the other unit that is placed adjacently to the one unit. In other words, the elastic element may always be placed between the encoder on the one unit and the flanged portion of the reinforcing ring on the other adjacent unit. Thus, there is no magnetic cohesion between the two units placed one over the other and oriented in one particular direction that would be caused by the magnetic attraction of the encoder on one of the two adjacent units. When an attempt is then made to remove one unit from the magazine that contains the two units placed in such a manner as to be oriented in one particular direction and then to mount the unit on the bearing unit, this can be done easily by simply sliding the unit vertically or horizontally with regard to the other unit. Thus, the encoder-equipped sealing device can be mounted with the highly improved reliability on the bearing unit by any mechanical means with the highly improved reliability.

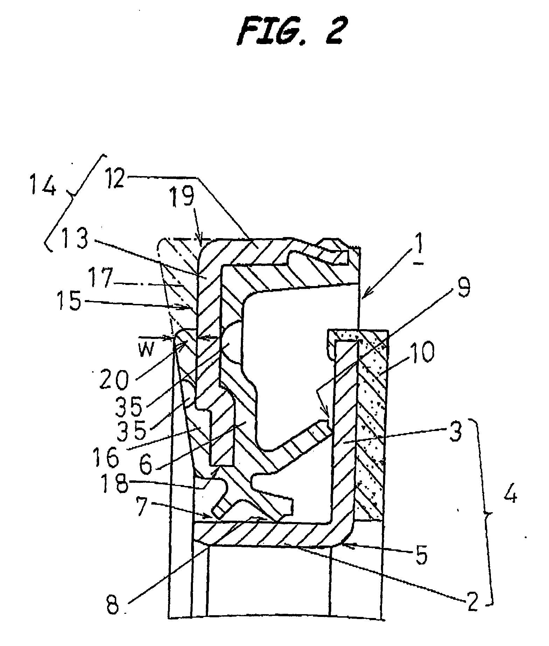

In one aspect of the encoder-equipped sealing device according to the present invention, the elastic element formed on and supported by the flanged portion of the before described other seal member may be formed to have a thickness that becomes greater from one end toward the other end of the flanged portion of the before described other seal member. The elastic element thus formed includes the thickened part that can prevent the magnetic cohesion from occurring between the two units. It may be seen from Fig. 2 that the elastic element thus formed has the surface that is slanted smoothly and with no undulations from one end of the flanged portion toward the other end. Thus, the units that are placed in such a manner as to be oriented in one particular direction within the mounting magazine can be removed easily from the magazine by simply sliding one unit vertically or horizontally with regard to the other unit, and can then be mounted on the bearing unit. When an attempt is thus made to remove the units in order to mount them on the bearing unit, this can be accomplished easily without causing the units to be stuck or caught by some parts within the magazine.

In another aspect of the encoder-equipped sealing device of the present invention, the elastic element formed in such a manner as to be supported by the flanged portion of the before described other seal member is provided such that it can cover the side of the flanged portion of the before described other seal member that is opposite the side facing the before described one seal member, and has a thickness that becomes greater from one end toward the other end of the flanged portion of the before described other seal member, with the forward end of the elastic element formed of a greater thickness projecting beyond the before described other end of the flanged portion of the before described other seal member.

In addition to the function and effect that may be provided by the encoder-equipped sealing device according to the first aspect, the encoder-equipped sealing device according to the second aspect can provide the better sealing capability for the bearing unit because there is the forward end formed to have the greatest thickness and project beyond the other end of the flanged portion when the encoder-equipped sealing device is mounted on the bearing unit.

### BRIEF DESCRIPTION OF THE DRAWINGS

Fig. 1 represents a cross section diagram for one example of the encoder-equipped sealing device according to the present invention, with some non-essential parts or elements being not shown;
Fig. 2 represents a cross section diagram for another example of the encoder-equipped sealing device according to the present invention, with some non-essential parts or elements being not shown;
Fig. 3 represents a cross section diagram that illustrates how two units of the inventive encoder-equipped sealing device shown in Fig. 2 are placed one over the other so that they are oriented in a particular direction, with some non-essential parts or elements being not shown;
Fig. 4 represents a cross section diagram for a further example of the inventive encoder-equipped sealing device according to the present invention, with some non-essential parts or elements being not shown;
Fig. 5 represents a cross section diagram for one example of the prior art encoder-equipped sealing device, with some non-essential parts or elements being not shown;
Fig. 6 represents a cross section diagram that illustrates how the prior art encoder-equipped sealing device shown in Fig. 5 is mounted within the bearing unit, with some non-essential parts or elements being not shown; and
Fig. 7 represents a cross section diagram that illustrates how two units of the prior art encoder-equipped sealing device shown in Fig. 5 are placed one over the other so that they are oriented in a particular direction, with some non-essential parts or elements being not shown.

### BEST MODES OF EMBODYING THE INVENTION

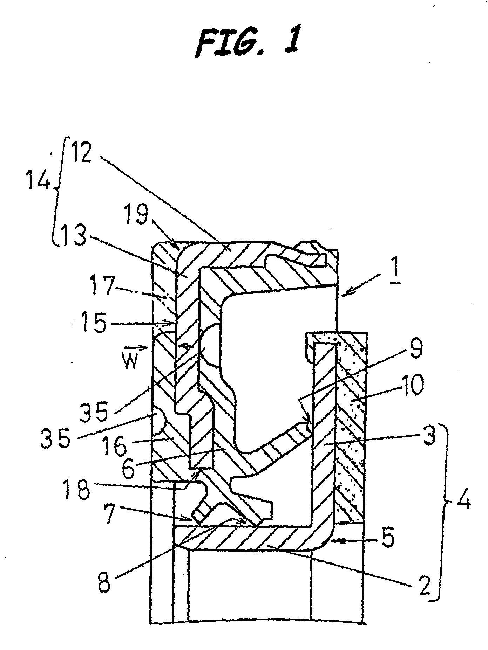

Referring now to Fig. 1, the encoder-equipped sealing device according to one embodiment of the present invention, generally identified by 1, includes two seal members 5, 15 combined together such that they are arranged to face opposite each other.

Specifically, the seal member 5 includes a reinforcing ring 4 with an L-shaped cross section having a cylindrical portion 2 and a flanged portion 3 extending from one end of the cylindrical portion 2 in the direction perpendicular to the cylindrical portion 2.

Similarly, the seal member 15 includes a reinforcing ring 14 with an L-shaped cross section having a cylindrical portion 12 and a flanged portion 13 extending from one end of the cylindrical portion 12 in the direction perpendicular to the cylindrical portion 12.

The seal member 15 further includes an elastic seal 6 formed such that it can be supported by the reinforcing ring 14. In the encoder-equipped sealing device 1 that has been completed as described above by combining those two seal members 5, 15 together such that they can be arranged to face opposite each other as shown in Fig. 1, the elastic seal 6 in the seal element 15 can extend toward the seal member 5, and seal portions 7, 8, 9 can be formed between the elastic seal 6 and seal member 5.

Each of the reinforcing rings 4, 14 may be formed from any of the metals such as iron, stainless steel and the like, as it is known in the relevant art. The elastic seal 6 may be formed from any of the elastic elements such as synthetic rubber, elastomer and the like, as it is known in the relevant art. The elastic seal 6 may be attached to the reinforcing ring 14 by using any of the processes that are known in the relevant art so that it can be supported by the reinforcing ring 14.

In the embodiment shown in Fig. 1, it may be seen that the elastic seal 6 is supported by the seal member 15, and extends toward the seal member 5 such that seal portions 7, 8, 9 can be formed in the contacting or non-contacting manner between the seal member 15 and the seal member 5. It may be understood from the above description concerning the prior art encoder-equipped sealing device 101 that the seal portions 7, 8, 9 are provided for serving to seal the bearing unit by isolating the inside from the outside, when the encoder-equipped sealing device 1 is mounted on the bearing unit as shown in Fig. 6. It is therefore sufficient that the elastic seal 6 should only be provided on at least one of the two seal members 5, 15 combined together. In one specific form, the elastic seal 6 thus formed on the one seal member 5 or 15 such that it can be supported by the reinforcing ring on the one seal member may be extended toward the other seal member 15 or 5, and the seal portions may be formed in the contacting or non-contacting manner between the two seal members 5, 15. In another specific form, the elastic seal 6 may be supported by the seal member 5 and may be extended toward the seal member 15 such that the seal portions can be formed in the contacting or non-contacting manner between the seal members 5, 15, although this is not shown.

In the encoder-equipped sealing device 1 according to the present invention, it is seen from Fig. 1 that an encoder 10 is attached to the side of the flanged portion 3 on at least one of the seal members 5, 15 (the seal member 5 in the embodiment shown in Fig. 1) opposite the side on which the other seal member 15 in this case is located.

As it is known to the relevant art, this encoder 10 may be formed from a mixture composed of any of the elastic elements such as synthetic rubber, synthetic resin and the like and any of the ferromagnetic materials such as ferrite in powdery forms. For example, the encoder may be molded into an annular magnetic ring from the mixture of the elastic rubber material and ferromagnetic materials such as ferrite in powdery forms by using any vulcanizing process, and may then be magnetized so that S polarity and N polarity can appear alternately in the circumferential direction. In its one form, the encoder 10 may be formed separately, and then may be attached to the particular lateral side of the flanged portion 3 as described above and shown in Fig. 1. In its alternative form, the encoder 10 may be molded together with the flanged portion 3 of the reinforcing ring 4 by the vulcanizing process so that it can be provided on the particular side of the flanged portion.

In the encoder-equipped sealing device 1 according to the present invention, the seal member on which the encoder 10 is not provided, that is, the seal member 15 that is located opposite the seal member 5 on which the encoder 10 is attached to the flanged portion 3 further includes an elastic element 16 formed on the side of the flanged portion 13 opposite the side on which the seal member 5 is located, such that the elastic element 16 can be supported by the flanged portion 13.

As it is known to the relevant art and similarly to the elastic seal 6, the elastic element 16 may be formed from any of the elastic materials such as synthetic rubber, elastomer and the like, and may be attached to the flanged portion 13 of the reinforcing ring 14 by using any vulcanizing process so that it can be supported by the flanged portion 13 of the reinforcing ring 14. It should be noted that as the elastic element 16 and elastic seal 6 may be formed from the same materials, the elastic element 16 may be formed together with the elastic seal 6 that is formed on the reinforcing ring 14 so that it can be supported by the reinforcing ring 14.

In the embodiment shown in Fig. 1, the elastic element 16 is formed into a certain thickness (W) on the side of the flanged portion 13 on which the elastic element 16 is provided (left side of the flanged portion 13 in Fig. 1).

It has been described that several units of the encoder-equipped sealing device 1, such as two units in this case, may be stored in the mounting magazine such that they can be oriented in one particular direction, until they are actually mounted on the bearing unit. As the elastic element 16 is interposed between the two units placed adjacently to each other within the magazine, the thickness (W) should be sufficient to prevent any magnetic cohesion between those two units that would otherwise be caused by the magnetic attraction of the encoder 10 in one of the two units.

The elastic element 16 should preferably have the thickness (W) of 0.7 mm or more, although it may depend upon the magnetic strength of the encoder 10.

When the two units of the encoder-equipped sealing device 1 are stored within the magazine such that they can be oriented in one particular direction as shown in Fig. 3, before they are actually mounted on the bearing unit, the elastic element 16 on one unit has its rear side (left side in Fig. 1) that engages the front side of the encoder 10 on the other unit (right side in Fig. 1). Thus, when the elastic element 16 is formed to extend from one end 18 to the other end 19 of the flanged portion 13, the elastic element 16 should have the length that corresponds to the height (vertical height in Fig. 1) of the encoder 10 as shown in Fig. 1. As a variation of the elastic element 16, an elastic element 17 may be provided such that it can extend over the entire left side of the flanged portion 13.

Fig. 2 represents another embodiment of the present invention.

The encoder-equipped sealing device according to the second embodiment contains parts or elements that are similar to those in the preceding embodiment shown in Fig. 1, and those similar parts or elements are given similar reference numerals. Those parts or elements are not described further in order to avoid the duplication.

The encoder-equipped sealing device 1 in accordance with the embodiment shown in Fig. 2 differs from the encoder-equipped sealing device in accordance with the embodiment shown in Fig. 1 in that the elastic element 16 formed such that it can be supported by the flanged portion 13 on the seal member 15 has a thickness that becomes gradually greater from one end 18 toward the other end 19 of the flanged portion 13 on the seal member 15.

In the embodiment shown in Fig. 2, the thickness (W) of the part 20 that is the greatest thickness should preferably be equal to 0.7 mm or more, which may depend on the magnetic strength of the encoder 10, like the preceding embodiment shown in Fig. 1.

The elastic element 16 may be formed such that its thickness can be becoming gradually greater, starting on one end 18 of the flanged portion 13 toward the part 20 having the greatest thickness, and such that the elastic element 16 can have a smooth, that is, non-undulating slanted surface.

In the embodiment shown in Fig. 2, the elastic element 17 may also be formed as shown by dot-dash lines such that it can have the length enough to cover all the lateral side (left side) of the flanged portion 13. It should be noted, however, that since the gap that would exist between the two units of the encoder-equipped sealing device, that is, between the encoder 10 on one unit and the flanged portion 13 on the other unit when the two units are stored within the magazine such that they can be placed adjacently to each other and can be oriented in one particular direction, before they are actually mounted on the bearing unit should be restricted by the part 20 of the thickness (W) that is the greatest, that part 20 should preferably be equal to 0.7 mm or more as described before.

Although this is not shown, the elastic element 16 may be formed to have the thickness that becomes greater from one end 19 of the flanged portion 13 toward the other end 18 of the flanged portion 13, or the elastic element 16 may be formed to have a thickness that becomes greater from one end 19 of the flanged portion 13 toward the other end 18 of the flanged portion 13 and such that the elastic element 16 can have the length enough to cover all the left side of the flanged portion 13.

The embodiment in which the elastic element is shown in dot-dash lines 17, as well as the embodiment in which no such elastic element is shown, should be understood to be encompassed within the concept of the invention.

Fig. 3 corresponds to Fig. 7 in which the encoder-equipped sealing device according to the prior art is shown, and illustrates how the two units 1, 1 of the encoder-equipped sealing device according to the present invention are placed adjacently to each other within the magazine so that they can be oriented in one particular direction, before they are actually mounted on the bearing unit 121.

When the two units 1, 1 of the encoder-equipped sealing device, each unit having the encoder 10 previously magnetized, are placed one over the other as shown in Fig. 3, the encoder 10 in one unit 1 that is located on the left side in Fig. 3 has its front side engaged by the elastic element 16 on the other unit 1 that is located adjacently to the one unit. It may be seen from Fig. 3 that the elastic element 16 exists between the encoder 10 on the one unit 1 located on the left side and the metallic flanged portion 13 on the other unit 1 that is located on the right side, and the encoder 10 is spaced away from the flanged portion 13 by the distance that corresponds to the part 20 of the thickness (W) of the elastic element 16 that is the greatest. Thus, the magnetic forces emitted from the encoder 10 on the one unit 1 (left) can be weakened before they can reach the metallic flanged portion 13 on the other unit 1 (right). By placing the metallic flanged portion 13 on the other unit 1 (right) out of the range of the magnetic forces from the encoder 10 on the left unit 1, the two units can easily be separated from each other.

In the embodiment of the encoder-equipped sealing device 1 shown in Fig. 2, the elastic element 16 is formed to have a thickness that becomes gradually greater from one end 18 of the flanged portion 13 toward the other end 19. When the two units 1, 1 are placed one over the other adjacently to each other within the magazine and an attempt is then made to separate those two units from each other by sliding one unit relative to the other unit vertically or horizontally, the one unit can be removed from the other unit without causing the one unit to be caught or engaged by the encoder 10 in the other unit or other parts of the other unit because the elastic element 16 is formed to have a thickness that becomes gradually greater from one end 18 of the flanged portion 13 toward the other end 19 of the flanged portion 13.

When the two units 1, 1 are placed one over the other within the magazine such that they can be oriented in one particular direction as shown in Fig. 3, and when an attempt is made to remove one unit from the magazine so that the one unit can be mounted on the bearing unit on the automotive vehicle by using any appropriate mounting device, the part 20 of the thickness of the elastic element 16 that is the greatest should preferably be provided at the height that corresponds to the top end of the encoder 10 as shown in Figs. 2 and 3 in order to permit the one unit to be removed without being caught or engaged by the encoder or other parts of the other unit.

As shown in Figs. 2 and 3, the part 20 of the thickness of the elastic element 16 that is the greatest should be formed on the top end of the encoder 10, or more specifically, at the position that corresponds to the radial outer diameter as indicated by an arrow 125 in Fig. 7, and the elastic element 16 should be formed to have a thickness that becomes gradually greater from the end 18 of the flanged portion 13 toward the part 20 that has the greatest thickness, and to have the smooth slanted surface. In this way, an attempt to remove one unit from the magazine can be made effectively without causing the one unit to be caught or engaged by the encoder 10 or other parts on the other unit.

When the seal member 15 is molded as part of the encoder-equipped sealing device by using a metal mold, in some cases, the roulette working process may be performed for forming small ridges or bumps that may support the metallic flanged portion by engaging its surface, thereby securing the metallic flanged portion 13 to the correct position within the metal mold. In Figs. 1 through 3, the part shown by 35 represents the ridges or bumps formed during the roulette working process.

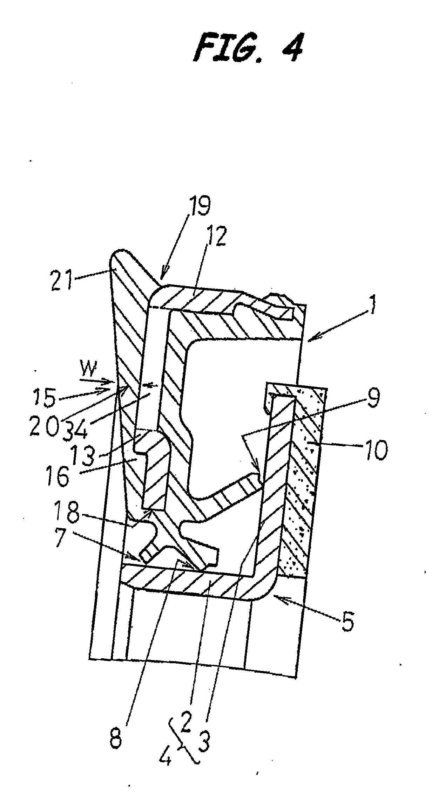

Fig. 4 represents another embodiment of the present invention.

The encoder-equipped sealing device according to this embodiment contains parts or elements that are similar to those in the embodiment shown in Fig. 1. Those similar parts or elements are given similar reference numerals, and are not described further here to avoid the duplication.

In the encoder-equipped sealing device 1 shown in Fig. 4, the elastic element 16 that is formed in such a manner as to be supported by the flanged portion 13 on the seal member 15 is provided on the side (left side in Fig. 4) of the flanged portion 13 on the seal member 15 opposite the side on which the seal member 5 is located so that it can covers the entire flanged portion 13. The elastic element 16 is also formed to have a thickness that becomes greater from one end 18 of the flanged portion 13 toward the other end 19 of the flanged portion 13, with the forward end 21 of the elastic element 16 being formed to have the greatest thickness and projecting out of the other end 19 of the flanged portion 13.

In accordance with the embodiment shown in Fig. 4, when the encoder-equipped sealing device 1 is mounted on the bearing unit 121 as shown in Fig. 6, the forward end 21 formed to have the greatest thickness and projecting out of the other end 19 of the flanged portion 13 can provide the excellent sealing capability for the bearing unit 121.

More specifically, the forward end 21 formed to have the greatest thickness can act as a projecting ring having the elasticity that permits the ring to extend beyond the outer diameter of the flanged portion 13, as viewed in the radial direction shown by an arrow 125 in Fig. 6.

The forward end 21 includes the part 20 of the thickness (W) that is the greatest just as in Figs. 1 and 2, and the part 20 becomes gradually greater toward the radial outside as shown in Fig. 4.

As the elastic element 16 has its forward end 21 formed to have the thickness that is gradually increasing, which increases the mass of the elastic element 16, the elastic element 16 can provide the strong repelling power that causes its forward end 21 to make close contact with the circumferential surface of the outer race 122 of the bearing unit 121, when the encoder-equipped sealing device 1 is actually mounted on the bearing unit 121 as shown in Fig. 6. Thus, the bearing unit 121 can be sealed perfectly.

In the encoder-equipped sealing device according to the embodiment shown in Fig. 4, the flanged portion 13 on the seal member 15 may have cutouts 34 as indicated by dot lines, such as slits or vent holes, which are provided at regular intervals around the circumference.

Those cutouts 34 may be provided for allowing some of the thickened part of the elastic element 16 to flow into the cutouts 84, when the encoder-equipped sealing device 1 is mounted on the bearing unit 121. Those cutouts 34 may also be provided for avoiding that the flanged portion 13 on one unit will be attracted magnetically by the magnetic forces of the encoder 10 on the other unit, when the two units are placed one over the other so that they can be oriented in one particular direction.

In any of the encoder-equipped sealing devices 1 according to the embodiments shown in Figs. 2 and 3, the elastic element 16 may be formed to have a thickness that becomes greater toward the thickened part 20, starting on the position corresponding to the point at which the right side of the rolling element 124 in Fig. 6 is located the nearest to the encoder-equipped sealing device 1 and toward the direction of the outer diameter as indicated by an arrow 125, when the encoder-equipped sealing device is mounted on the bearing unit 121 as shown in Fig. 6. In this way, the elastic element 16 can have the protrusion (thickness W) that is sufficient to prevent the magnetic cohesion due to the magnetic attraction of the encoder 10 from occurring between the two units 1, 1 that are placed adjacently to each other.

### Possible Industrial Applications of the Invention

Several units, such as two units, of the encoder-equipped sealing device according to any of the embodiments of the present invention may be stored in a mounting magazine such that they are placed adjacently to each other and such that they can be oriented in one particular direction, before they are actually mounted on a bearing unit. One of the units can be removed from the mounting magazine by simply sliding the one unit vertically or horizontally relative to the other unit, and then can be mechanically mounted on the bearing unit without causing any problem or inconvenience in handling the units. The present invention enables this mounting to occur with the drastically increased reliability, and thus may be used advantageously in such applications as the manufacturing process of the bearing units on the automotive vehicle wheels.

## Claims

1. An encoder-equipped sealing device that includes two seal members arranged to face opposite each other and each having a reinforcing ring with an L-shaped cross section, each of the reinforcing rings having a cylindrical portion and a flanged portion extending from one end of the cylindrical portion in the direction perpendicular to the cylindrical portion, wherein
at least one seal member of the two seal members includes an elastic seal formed in such a manner as to be supported by the reinforcing ring of said one seal member, the elastic seal extending toward the other seal member such that a seal portion is formed between the elastic seal and said other seal member; and
at least one seal member of the two seal members includes an encoder on the side of the flanged portion of the reinforcing ring of said one seal member that is opposite the side facing the other seal member; **characterized that**
said other seal member, arranged to face opposite said one seal member including an encoder on the flanged portion, includes an elastic element formed in such a manner as to be supported by the flanged portion of the reinforcing ring of said other seal member, said elastic element formed on the side of the flanged portion of the reinforcing ring of said other seal member that is opposite the side facing said one seal member includes an encoder on the flanged portion.

2. The encoder-equipped sealing device as defined in Claim 1, wherein the elastic element formed in such a manner as to be supported by the flanged portion of said other seal member has a thickness that becomes greater from one end toward the other end of the flanged portion of said other seal member.

3. The encoder-equipped sealing device as defined in Claim 1 or 2, wherein the elastic element formed in such a manner as to be supported by the flanged portion of said other seal member is provided such that it can cover the side of the flanged portion of said other seal member that is opposite the side facing said one seal member, and has a thickness that becomes greater from one end toward the other end of the flanged portion of said other seal member, with the forward end of the elastic element formed of a greater thickness projecting beyond said other end of the flanged portion of said other seal member.
